# FASCICULE DE BREVET EUROPEEN

(11) **EP 3 350 005 B1**
(45) Date de publication et mention de la délivrance du brevet: **04.11.2020**
(21) Numéro de dépôt: 16762742.1
(22) Date de dépôt: 24.08.2016
(51) Int. Cl.: B60K 11/08

(54) **DISPOSITIF D'OBTURATION D'ENTRÉE D'AIR DE VÉHICULE AUTOMOBILE, MODULE DE FACE AVANT ET VÉHICULE AUTOMOBILE CORRESPONDANTS**
VORRICHTUNG ZUR ABDICHTUNG DER LUFTAUFNAHME EINES KRAFTFAHRZEUGS, ZUGEHÖRIGES FRONTMODUL UND KRAFTFAHRZEUG
DEVICE FOR SEALING THE AIR INTAKE OF A MOTOR VEHICLE, CORRESPONDING FRONT-END MODULE AND MOTOR VEHICLE

(30) Priorité: 14.09.2015 FR 1558572
(43) Date de publication de la demande: 25.07.2018
(73) Titulaire: Valeo Systemes Thermiques, 78320 Le Mesnil Saint Denis (FR)
(72) Inventeur: VACCA, Frédéric, 78910 Behoust (FR); MITIDIERI, Enzo, 78260 Achères (FR)
(74) Mandataire: Tran, Chi-Hai
(86) Numéro de dépôt international: PCT/EP2016/069927
(87) Numéro de publication internationale: WO 2017/045879

(56) Documents cités:
- DE-A1- 4 435 396
- DE-A1-102007 033 413
- DE-A1-102008 051 394
- DE-A1-102008 062 889
- DE-A1-102013 103 377
- DE-U1-202015 100 764
- US-A1- 2010 320 020

## Description

La présente invention concerne le maintien d'un dispositif d'obturation d'entrée d'air, généralement agencé en amont d'un équipement de véhicule automobile, tel qu'un dispositif d'échange thermique, sur une structure porteuse du véhicule, notamment sur une structure porteuse de module de face avant du véhicule.

L'invention concerne encore un module de face avant correspondant et un véhicule correspondant.

Les faces avant de véhicules automobiles sont généralement composées d'une entrée d'air ou de deux entrées d'air, dites voie haute et voie basse, séparées par une poutre parechoc. Derrière cette poutre parechoc est généralement placé un dispositif d'échange thermique du véhicule automobile, comprenant un ou plusieurs échangeurs thermiques, comme par exemple celui utilisé pour la climatisation de l'habitacle, destinés à être traversés par un flux d'air introduit par l'entrée ou les entrées d'air à l'avant du véhicule. Le document DE 4435396 décrit une grille de radiateur d'automobile. Une bride s'étend depuis un premier segment, pour se situer au bord du couvercle du capot lorsque la grille est montée. Des fixations de la bride la fixent au couvercle du capot pour permettre un mouvement élastique de flexion ou d'oscillation lors d'un impact extérieur. La grille du radiateur est capable de supporter un choc externe sans imposer une déformation plastique à la partie du corps, aux composants élastiques ou à la bride.

Un dispositif d'obturation comprenant de façon connue au moins un panneau de volets est également généralement monté dans les entrées d'air du véhicule. Les volets sont par exemple formés de lamelles montées pivotantes transversalement sur le panneau. L'inclinaison des volets peut être pilotée entre une position verticale de fermeture bloquant le passage de l'air et plusieurs positions intermédiaires jusqu'à une position horizontale d'ouverture où un flux d'air maximum peut circuler. Lorsque le panneau de volets est fermé, le véhicule présente un meilleur coefficient de pénétration de l'air, ce qui permet de diminuer la consommation de carburant et l'émission de CO₂.

En outre, les volets pilotés sont agencés devant un dispositif d'échange thermique, ce qui permet en position de fermeture, d'accélérer la montée en température des échangeurs en phase de chauffage en diminuant également la consommation du véhicule et donc l'émission de CO₂.

Ce dispositif d'obturation doit être monté sur une structure porteuse du véhicule automobile, c'est-à-dire, généralement sur une structure faisant partie de la caisse du véhicule, soit encore sur une structure porteuse du module de face avant, prêt à être monté sur le véhicule par le constructeur.

La poutre de pare-chocs avant permet d'encaisser des chocs frontaux de faible intensité. Cependant, des chocs d'intensité un peu plus élevée peuvent endommager des éléments ou équipements du véhicule situés derrière la poutre de pare-chocs avant, et en particulier le module de face avant du véhicule automobile, qui supporte notamment le dispositif d'obturation avec ces volets et généralement un ou plusieurs échangeurs thermiques. Le ou les panneaux de volets, voire le ou les échangeurs thermiques situés derrière les volets, peuvent donc être dégradés par de tels chocs.

Il est donc souhaitable de limiter l'endommagement et les dégradations qui seraient occasionnées par un choc accidentel, notamment sur le module de face avant dont la réparation ou le remplacement peut s'avérer coûteux.

Selon une solution connue, le dispositif d'obturation d'entrée d'air est prévu pour participer à l'absorption de l'énergie du choc en se déformant et/ou en se cassant.

La présente invention vise à améliorer les solutions de l'état de la technique en proposant une solution dans laquelle le dispositif d'obturation est sous certaines conditions non déformé en cas de choc et ne doit pas être remplacé dans son intégralité.

L'invention a pour objectif de pallier les inconvénients de l'art antérieur en proposant une alternative du dispositif d'obturation permettant de limiter les dégradations qui seraient occasionnées par un choc accidentel, en particulier un choc normalisé connu sous le nom de choc Danner correspondant à l'impact du véhicule contre un obstacle fixe à une vitesse allant jusqu'à 16 km/h.

À cet effet, l'invention a pour objet un dispositif d'obturation d'entrée d'air pour véhicule automobile selon la revendication 1.

En cas de choc sur le moyen d'obturation, le déplacement du moyen d'obturation depuis une position de maintien initiale vers une position reculée par rapport à la position initiale se fait par exemple dans une direction de déplacement correspondant à une direction longitudinale dudit véhicule à l'état monté du dispositif d'obturation dans ledit véhicule.

Le support est avantageusement réalisé sous forme d'une ou plusieurs pièces distinctes du moyen d'obturation.

Selon l'invention, le moyen d'obturation du flux d'air comporte au moins un panneau de volets destiné à être agencé en amont d'un dispositif d'échange thermique du véhicule automobile selon le sens d'écoulement d'un flux d'air.

Ainsi, en cas de choc sur le moyen d'obturation tel qu'un panneau de volets, l'énergie de l'impact peut être au moins partiellement, et de préférence peut être graduellement, absorbée, du fait du déplacement du moyen d'obturation engendré.

Ceci permet d'empêcher l'endommagement du moyen d'obturation, ainsi que celui d'éventuels échangeurs thermiques disposés derrière ce moyen d'obturation.

Ledit dispositif d'obturation peut en outre comporter une ou plusieurs des caractéristiques suivantes, prises séparément ou en combinaison.

Selon un aspect de l'invention, le ou chaque moyen de guidage amortissant est configuré pour permettre un déplacement réversible du moyen d'obturation en cas de choc. Le ou chaque moyen de guidage amortissant est en outre configuré pour permettre le retour du moyen d'obturation vers la position de maintien initiale à la suite du choc en l'absence de contrainte exercée sur le dispositif d'obturation.

Selon un autre aspect de l'invention, le ou chaque moyen de guidage amortissant est un moyen de guidage en translation.

Avantageusement, le ou chaque moyen de guidage amortissant est configuré pour définir un chemin de déplacement, par exemple un chemin de coulissement, par paliers successifs par exemple dans la direction de déplacement. Autrement dit, le moyen d'obturation tel qu'un panneau de volets, peut effectuer un mouvement saccadé en cas de choc.

Selon l'invention, le ou chaque moyen de guidage amortissant est un moyen de guidage d'un élément de retenue associé porté par le moyen d'obturation, depuis la position de maintien initiale vers une position reculée, en cas de choc, par exemple dans la direction de déplacement suivant un chemin de coulissement.

En particulier, le ou chaque moyen de guidage amortissant peut être configuré pour guider en translation un élément de retenue associé porté par le moyen d'obturation par paliers en cas de choc

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique une vue de face d'un dispositif d'obturation selon un premier mode de réalisation,
- la figure 2 montre une vue de côté du dispositif d'obturation de la figure 1 selon le premier mode de réalisation,
- la figure 3 est une vue en perspective d'un exemple de réalisation qui ne fait pas partie de l'invention d'un moyen de guidage amortissant d'un support du dispositif d'obturation de la figure 1 ou 2,
- la figure 4 est une vue de dessus du moyen de guidage amortissant selon l'exemple de la figure 3,
- la figure 5 est une vue en perspective d'un autre exemple de réalisation selon l'invention d'un moyen de guidage amortissant d'un support du dispositif d'obturation de la figure 1 ou 2,
- la figure 6 est une vue de dessus du moyen de guidage amortissant selon l'exemple de la figure 5,
- la figure 7 représente de façon schématique une vue de face d'un dispositif d'obturation selon un deuxième mode de réalisation ne faisant pas partie de l'invention,
- la figure 8a montre une vue de côté du dispositif d'obturation de la figure 7 selon le deuxième mode de réalisation en l'absence de choc,
- la figure 8b montre une vue de côté du dispositif d'obturation de la figure 7 selon le deuxième mode de réalisation suite à un choc,
- la figure 9a montre une vue de côté du dispositif d'obturation de la figure 7 comprenant un support selon une variante de réalisation en l'absence de choc,
- la figure 9b montre une vue de côté du dispositif d'obturation de la figure 9a suite à un choc,
- la figure 10 représente de façon schématique une vue de face d'un dispositif d'obturation selon un troisième mode de réalisation ne faisant pas partie de l'invention,
- la figure 11a montre une vue de côté du dispositif d'obturation de la figure 10 selon le troisième mode de réalisation en l'absence de choc,
- la figure 11b montre une vue de côté du dispositif d'obturation de la figure 10 selon le troisième mode de réalisation suite à un choc,
- la figure 12 représente de façon schématique un exemple de réalisation avec une coopération de forme entre le support et le moyen d'obturation du dispositif d'obturation des figures 10 à 11b,
- la figure 13 représente de façon schématique une variante de réalisation de la figure 12 montrant une autre coopération de forme entre le support et le moyen d'obturation.

Sur ces figures, les éléments sensiblement identiques portent les mêmes références.

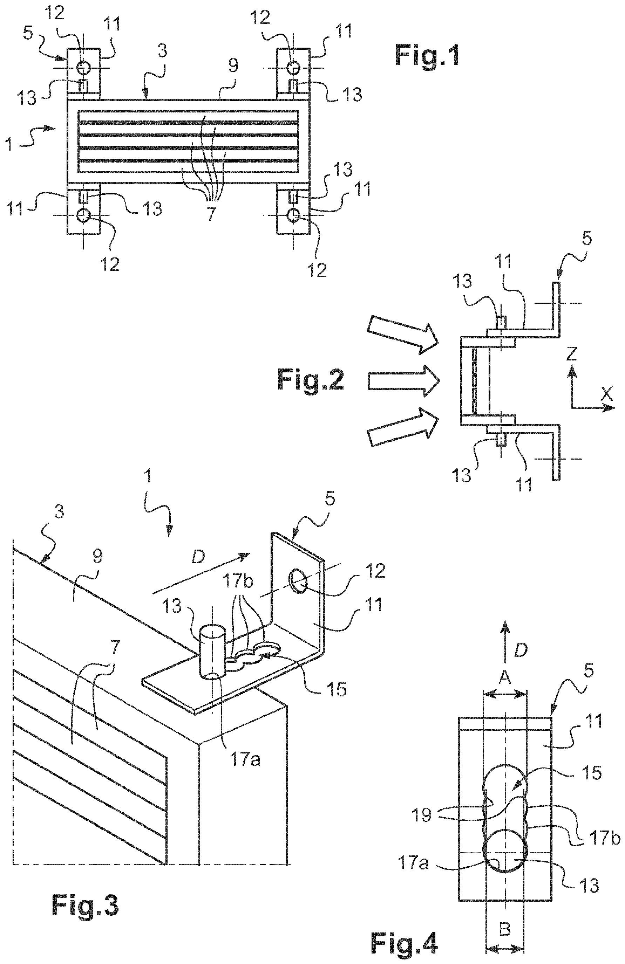

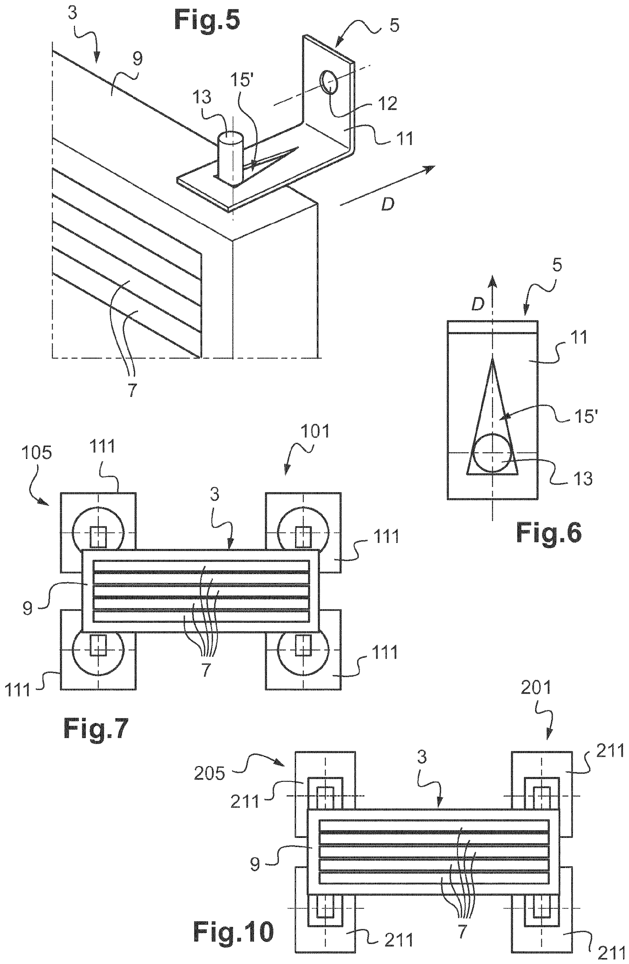

Les éléments des figures 7 à 9b, respectivement 10 à 13, correspondant aux éléments des figures 1 à 6, portent les mêmes références précédées d'une centaine 1, respectivement d'une centaine 2.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

L'invention concerne un dispositif d'obturation 1, 101, 201 d'une ou plusieurs entrées d'air d'un véhicule automobile.

De façon connue, un véhicule automobile comporte une ou plusieurs entrées d'air ménagées à l'avant du véhicule. Le véhicule automobile comporte également un dispositif d'échange thermique comprenant un ou plusieurs échangeurs thermiques, tel qu'un condenseur et/ou un radiateur.

Le dispositif d'obturation 1, 101, 201 est destiné à être agencé en amont du dispositif d'échange thermique selon le sens d'écoulement d'un flux d'air introduit par l'entrée ou les d'air du véhicule automobile. À l'état monté dans le véhicule automobile, le dispositif d'obturation 1, 101, 201 est agencé devant le dispositif d'échange thermique selon l'axe longitudinal du véhicule automobile.

Dans la présente description, les termes avant/arrière sont désignés en référence au sens de marche du véhicule automobile et vertical/horizontal, supérieur/inférieur ou haut/bas sont désignés en référence à la disposition des éléments sur les figures, qui correspond à la disposition des éléments à l'état monté dans le véhicule automobile.

### Premier mode de réalisation

Les figures 1 et 2 montrent une représentation en perspective d'un dispositif d'obturation 1 selon un premier mode de réalisation. L'axe X représenté sur la figure 2 correspond à l'axe longitudinal du véhicule automobile et l'axe Z correspond à l'axe vertical selon la hauteur du véhicule automobile.

Le dispositif d'obturation 1 comporte au moins un moyen d'obturation 3 destiné à être agencé dans l'entrée d'air du véhicule automobile et un support 5 de ce moyen d'obturation 3.

Avantageusement, le moyen d'obturation comporte un panneau 3 de volets 7.

En particulier dans le cas où le véhicule 1 comporte plusieurs entrées d'air, le dispositif d'obturation 1, 101, 201 peut comporter plusieurs panneaux de volets destinés à être agencés dans une entrée d'air respective. Les panneaux 3 de volets 7 peuvent être indépendants l'un de l'autre.

Le ou chaque panneau 3 de volets 7 comporte une pluralité de volets 7. Le panneau 3 présente par exemple un cadre 9 sur lequel est installé au moins un ensemble de volets 7. Selon l'exemple illustré, le cadre 9 est de forme générale sensiblement parallélépipédique. Au sein de ce cadre 9, les volets 7 peuvent être superposés, par exemple ici selon l'axe vertical Z, et disposés parallèlement les uns avec les autres. Les volets 7 peuvent être mobiles entre une position d'obturation d'une ou des entrées d'air, par exemple une position d'obturation verticale, dans laquelle les volets 7 sont fermés empêchant ainsi l'air de passer, et plusieurs positions intermédiaires jusqu'à une position d'ouverture optimale, par exemple une position horizontale, permettant à l'air de traverser le dispositif d'obturation avec le plus grand débit possible. Les volets 7 sont avantageusement montés mobiles en pivotement autour d'axes de pivotement parallèles s'étendant par exemple selon la largeur du véhicule automobile.

Dans la présente, on décrit un panneau 3 de volets 7 comme moyen d'obturation, bien entendu l'invention s'applique aussi à un autre moyen d'obturation d'entrée d'air de véhicule automobile, notamment destiné à être agencé en face avant du véhicule devant un dispositif d'échange thermique.

Le support 5 est quant à lui, apte à maintenir le panneau 3 de volets 7. Le support 5 est avantageusement une pièce distincte du panneau 3 de volets 7.

Selon l'exemple illustré, le dispositif d'obturation 1 présente plusieurs zones de fixation, de préférence au moins quatre zones de fixation, entre le moyen d'obturation 3 et le support 5. Ici, les zones de fixation sont prévues de part et d'autre du panneau 3 de volets 7 selon l'axe vertical Z, donc en haut et en bas du panneau 3 de volets 7, mais également de chaque côté du panneau 3 de volets 7, donc à gauche et à droite en référence à la disposition illustrée sur la figure 1.

Selon l'exemple illustré sur les figures 1 et 3, le support 5 présente un moyen de fixation 11 en chaque zone de fixation, par exemple sous forme de languette de fixation 11. Dans ce cas, le panneau 3 de volets 7 présente un élément de retenue 13 au niveau de chaque zone de fixation, ici le panneau 3 de volets 7 présente quatre éléments de retenue 13, destiné à coopérer avec un moyen de fixation 11 associé du support 5.

Le support 5 maintient donc d'une part le moyen d'obturation 3, et est apte à être fixé, d'autre part, sur une structure porteuse (non représentée) du véhicule automobile ou d'un module de face avant du véhicule automobile

Pour ce faire, chaque languette de fixation 11 du support 5 est selon l'exemple illustré réalisée en deux parties avec une partie configurée pour la fixation sur la structure porteuse (non représentée) et une autre partie configurée pour le maintien du panneau 3 de volets 7. En référence aux figures 2 et 3, chaque languette de fixation 11 est par exemple conformée sensiblement en « L ». La partie configurée pour la fixation sur la structure porteuse peut présenter un ou plusieurs trous 12 pour une fixation rigide sur la structure porteuse (non représentée). On entend par « fixation rigide », que les languettes de fixation 11 sont agencées de manière fixe par rapport à cette structure porteuse (non représentée), notamment sans prévoir de souplesse de déplacement des languettes de fixation 11 par rapport à la structure porteuse (non représentée).

Le support 5 est en outre configuré pour permettre le déplacement du moyen d'obturation, ici du panneau 3 de volets 7, depuis une position de maintien initiale, vers une position reculée par rapport à la position initiale, dans une direction de déplacement D, en cas de choc (schématisé par les flèches sur la figure 2) sur le véhicule automobile et donc un choc sur le panneau 3 de volets 7. À l'état monté du dispositif d'obturation 1 dans le véhicule automobile, le panneau 3 de volets 7 peut se déplacer, en cas de choc, suivant l'axe longitudinal X du véhicule automobile.

Les matériaux et les dimensions du cadre 9 et des éléments de retenue 13 du panneau 3 de volets 7 d'une part, et le support 5 d'autre part, sont choisis pour permettre d'absorber une contrainte due à un choc sur le panneau 3 de volets 7 en provoquant le déplacement du panneau 3 de volets 7 sans casser ce panneau 3 de volets 7. À titre d'exemple non limitatif, le cadre 9 et les éléments de retenue 13 peuvent être réalisés en polypropylène avec des fibres de verre, et le support 5, notamment chaque languette de fixation 11 du support 5, peut être en matériau métallique.

Plus précisément, le support 5 est configuré pour permettre en cas de choc, le déplacement du panneau 3 de volets 7, depuis la position de maintien initiale vers une position reculée par rapport à la position initiale, au niveau de chaque zone de fixation.

Pour cela, le support 5 comprend, avantageusement au niveau de chaque languette de fixation 11, un moyen de guidage 15, 15' amortissant du panneau 3 de volets 7, depuis la position de maintien initiale vers une position reculée, en cas de choc, dans la direction de déplacement D. Le guidage peut être un guidage en translation.

Plus précisément, chaque moyen de guidage 15, 15' amortissant permet de guider un élément de retenue 13 associé et respectif porté par le panneau 3 de volets 7.

Selon le premier mode de réalisation illustré sur les figures 1 à 6, chaque languette de fixation 11 présente un moyen de guidage 15, 15' en translation d'un élément de retenue 13 associé porté par le panneau 3 de volets 7.

Le moyen de guidage est ici réalisé sous la forme d'une rainure 15, 15' au niveau de chaque languette de fixation 11. Plus précisément, la rainure 15, 15' est ménagée sur une partie de la languette de fixation 11 au moins partiellement en appui contre le cadre 9 du panneau 3 de volets 7.

L'intérieur de la rainure 15, 15' permet de définir un chemin de déplacement, ici de coulissement, pour l'élément de retenue 13 associé.

L'élément de retenue 13 peut quant à lui être réalisé sous forme de plot ou tige de fixation faisant saillie du cadre 9 du panneau 3 de volets 7, ici selon une direction sensiblement perpendiculaire à la direction de déplacement D selon l'axe vertical Z. Selon l'exemple particulier illustré sur les figures 1 à 6, le panneau 3 de volets 7 porte quatre plots de fixation 13 faisant saillie du cadre 9 et respectivement insérés dans une rainure 15, 15' associée d'une languette de fixation 11 correspondante du support 5.

Dans la suite de la description du premier mode de réalisation, on se réfère à un plot de fixation comme élément de retenue 13. Bien entendu, d'autres variantes sont envisageables.

Chaque plot de fixation 13 peut se déplacer dans une rainure associée 15, 15' depuis une position de maintien initiale vers une ou plusieurs positions reculées par rapport à la position de maintien initiale selon la direction de déplacement D. Le panneau 3 de volets 7 est dans la position de maintien initiale lorsque chaque plot de fixation 13 est dans la position de maintien initiale dans la rainure 15, 15' associée, et c'est le déplacement des plots de fixation 13 vers une position reculée qui permet le déplacement du panneau 3 de volets 7 vers la position reculée.

Par ailleurs, la rainure 15, 15' peut présenter une forme générale s'étendant longitudinalement suivant la direction de déplacement D.

Selon l'exemple des figures 3 et 4 qui ne fait pas partie de l'invention, la rainure 15 présente une forme générale sensiblement oblongue dans la direction de déplacement *D.*

Afin de définir plusieurs paliers de déplacement, ici de coulissement, permettant de générer en cas de choc un mouvement saccadé ou par paliers du plot de fixation 13, on peut prévoir au moins une butée au déplacement de ce plot de fixation 13 dans le chemin de coulissement défini par la rainure 15. Le dispositif d'obturation est ainsi apte à rester dans une position fixe définie par un des paliers.

Selon la variante illustrée sur les figures 3 et 4 qui ne fait pas partie de l'invention, la rainure 15 définit :
- une première ouverture 17a destinée à recevoir le plot de fixation 13 dans la position de maintien initiale,
- au moins une deuxième ouverture 17b destinée à recevoir le plot de fixation 13 dans une position reculée en cas de choc.

Dans l'exemple illustré, la rainure 15 définit quatre ouvertures 17a, 17b successives : une première ouverture 17a et trois ouvertures subséquentes 17b.

Afin de distinguer deux ouvertures consécutives, la rainure 15 présente une portion rétrécie entre ces deux ouvertures consécutives. Pour ce faire, le contour de la rainure 15 présente au moins un bord rentrant 19 orienté vers l'intérieur de la rainure 15.

Le ou les bords rentrants 19 permettent de définir une portion rétrécie entre deux ouvertures consécutives. Dans l'exemple illustré, le contour de la rainure 15 présente entre deux ouvertures consécutives deux bords rentrants 19 en vis-à-vis. Comme schématisé sur la figure 4, la dimension A, ici la largeur, de la rainure 15 au niveau d'une ouverture 17a ou 17b est supérieure à la dimension B, ici la largeur, au niveau des bords rentrants 19. La dimension A est prévue pour permettre l'insertion du plot de fixation 13.

Selon le mode de réalisation illustré sur les figures 3 et 4 qui ne fait pas partie de l'invention, les bords rentrants 19 en vis-à-vis forment par paire une butée au déplacement du plot de fixation 13 dans le chemin de coulissement. Chaque paire de bords rentrant 19 en vis-à-vis délimite une position reculée correspondante du plot de fixation 13 en cas de choc. Ainsi, dans cet exemple, la rainure 15 présente quatre ouvertures 17a, 17b, les ouvertures 17a, 17b étant séparées deux à deux par des bords rentrant 19 vers l'intérieur de la rainure 15 qui permettent de distinguer ces quatre ouvertures qui forment alors quatre positions possibles pour le plot de fixation 13 associé.

La rainure 15 définit ainsi un chemin de coulissement pour le plot de fixation 13 par paliers successifs dans la direction de déplacement D. En effet, lors d'un choc frontal sur le véhicule automobile occasionnant un choc sur le panneau 3 de volets 7, chaque plot de fixation 13 sera guidé dans une rainure 15 associée, vers l'arrière depuis une ouverture 17a, 17b vers la suivante en forçant le passage au niveau de la portion rétrécie de dimension B.

Les languettes de fixation 11 du support 5 seront alors déformées au niveau des bords rentrant 19. En cas de déformation ou d'endommagement, chaque languette de fixation 11 peut être aisément retirée et remplacée, sans nécessiter de réparer ou changer le panneau 3 de volets 7. Les languettes de fixation 11 du support 5 font ainsi office de « fusibles mécaniques » qui sont déformés en cas de choc empêchant la transmission d'un effort mécanique trop important à la structure porteuse du véhicule (non représentée) et notamment au dispositif d'échange thermique généralement agencé derrière le panneau 3 de volets 7 dans le véhicule.

Selon l'intensité du choc, le plot de fixation 13 peut se déplacer depuis la première ouverture 17a vers la deuxième ouverture 17b ou une ouverture 17b suivante avec un mouvement saccadé ou par paliers le long de la rainure 15.

Ainsi, en cas de choc, cette conception des rainures 15 des languettes de fixation 11 du support 5, permet d'absorber le choc en déplaçant l'ensemble des plots de fixation 13 et donc le panneau 3 de volets 7 vers l'arrière selon la direction de déplacement D. En outre, suite à choc à faible vitesse, le panneau 3 de volets 7 reste maintenu par le support 5, mais cette fois les plots de fixation 13 sont dans une autre ouverture 17b de la languette de fixation 11 associée, que l'ouverture 17a pour le maintien dans la position initiale.

Selon une autre variante selon l'invention illustrée sur les figures 5 et 6, la rainure 15' est conformée avec un rétrécissement progressif suivant la direction de déplacement D. La section de passage du plot de fixation 13 diminue donc au fur et à mesure suivant la direction de déplacement D, rendant le déplacement du plot de fixation 13 dans la rainure 15' de plus en plus dur, à mesure que le plot de fixation 13 se rapproche de l'extrémité de la rainure 15' opposée au panneau 3 de volets 7. Dans cet exemple, la rainure 15' est de forme sensiblement triangulaire avec le sommet du triangle agencé du côté opposé au panneau 3 de volets 7 et délimitant une position reculée extrême de fin de course du plot de fixation 13 en cas de choc.

Ainsi, la rainure 15' définit une ouverture d'introduction du plot de fixation 13 associé, par exemple ici au niveau de la base du triangle, et cette ouverture d'introduction est prolongée par un canal pour le déplacement du plot de fixation 13 qui rétrécit progressivement suivant la direction de déplacement D. Grâce à cette conception, la contrainte exercée par le contour de la rainure 15' va augmenter avec le déplacement vers l'arrière du plot de fixation 13 selon la direction de déplacement D.

Ici encore, la rainure 15' définit ainsi un chemin de coulissement pour le plot de fixation 13 par paliers successifs dans la direction de déplacement D. En effet, lors d'un choc frontal sur le véhicule automobile occasionnant un choc sur le panneau 3 de volets 7, chaque plot de fixation 13 sera guidé dans une rainure 15' associée, vers l'arrière en forçant le passage au niveau du canal qui se rétrécit de plus en plus. Selon l'intensité du choc, le plot de fixation 13 peut se déplacer avec un mouvement progressif jusqu'à une position intermédiaire dans la rainure 15' ou jusqu'à l'extrémité, ici le sommet du triangle. Le contour de la rainure 15' sera alors déformé par le passage en force du plot de fixation 13.

Comme précédemment, en cas de choc, cette conception des rainures 15' des languettes de fixation 11 du support 5 avec un rétrécissement progressif, permet d'absorber le choc en déplaçant l'ensemble des plots de fixation 13 et donc le panneau 3 de volets 7 vers l'arrière selon la direction de déplacement D.

### Deuxième mode de réalisation qui ne fait pas partie de l'invention

On a représenté sur la figure 7 un dispositif d'obturation 101 selon un deuxième mode de réalisation. Seules les différences par rapport au premier mode de réalisation décrit en référence aux figures 1 à 6, sont détaillées par la suite. Les éléments identiques ne sont pas décrits de nouveau.

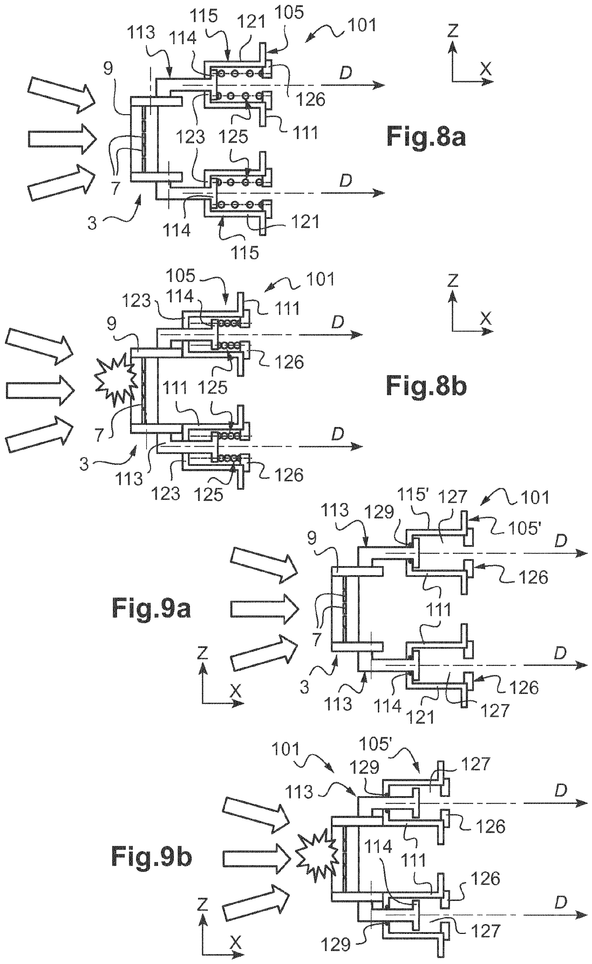

Comme cela est mieux visible sur les figures 8a à 9b, selon ce deuxième mode de réalisation, le support 105, 105' du panneau 3 de volets 7 peut présenter au niveau de chaque zone de fixation un moyen de fixation 111 réalisé sous la forme d'un réceptacle ou manchon 111 de fixation. Le support 205 présente, ici au niveau de chaque manchon 111 de fixation, un moyen de guidage 115, 115' amortissant, comprenant un logement 121 ou réceptacle, par exemple de forme générale sensiblement cylindrique, pour recevoir un élément de retenue 113 associé porté par le panneau 3 de volets 7 et ce dernier peut être guidé en déplacement dans le logement 121 depuis la position de maintien initiale illustrée sur les figures 8a et 9a vers une position reculée, tel qu'illustré sur les figures 8b et 9b.

Dans cet exemple, la partie arrière du logement 121 opposée au panneau 3 de volets 7 est ici configurée pour la fixation sur une structure porteuse (non représentées).

On peut prévoir pour ce deuxième mode de réalisation un élément de retenue réalisé sous forme de patte de fixation 113. Ici le panneau 3 de volets 7 comprend quatre pattes de fixation 113 qui s'étendent depuis le cadre 9. Chaque patte de fixation 113 s'étend au moins partiellement, selon cet exemple principalement, dans la direction de déplacement D. Les pattes de fixation 113 peuvent être respectivement raccordées par une portion coudée au cadre 9 du panneau 3 de volets.

De plus, chaque patte de fixation 113 présente à son extrémité longitudinale libre, ici l'extrémité longitudinale arrière opposée au cadre 9, une butée 114 agencée à l'intérieur du logement 121, et cette butée 114 vient en appui contre au moins une paroi complémentaire 123 du logement 121 dans la position de maintien initiale tel qu'illustré sur les figures 8a et 9a.

Dans l'exemple particulier illustré sur les figures 8a à 9b, le logement 121 présente à son extrémité avant, du côté du panneau 3 de volets 7, une paroi 123 de forme sensiblement annulaire contre laquelle la butée 114 terminant une patte de fixation 113 vient en appui dans la position de maintien initiale. La paroi 123 forme donc une paroi avant ou frontale. L'ouverture de la paroi annulaire 123 présente un plus petit diamètre que le corps du logement 121 sensiblement cylindrique à l'intérieur duquel la patte de fixation 113 peut se déplacer. De plus, la butée 114 en extrémité de la patte de fixation 113 est de dimension supérieure au diamètre de cette ouverture de la paroi annulaire 123 de sorte que la butée 114 ne peut pas sortir du logement 121. Enfin, le diamètre de cette ouverture de la paroi annulaire 123 est toutefois suffisamment grand pour permettre le passage du reste de la patte de fixation 113 en dehors de la butée 114.

En référence aux figures 8b et 9b, en cas de choc, chaque patte de fixation 113 est déplacée à l'intérieur du logement 121 selon un mouvement de translation dans la direction de déplacement D éloignant la butée 114 de la paroi avant 123 du logement 121.

On peut prévoir aussi des butées au déplacement des pattes de fixation 113 pour définir une ou plusieurs positions reculées. Dans cet exemple, le cadre 9 peut venir en butée contre la paroi 123, du côté extérieur du logement 121 en fin de course du panneau 3 de volets 7.

Avantageusement, le déplacement des pattes de fixation 113, et donc du panneau 3 de volets 7 est réversible. Autrement dit, le support 105, 105', et en particulier chaque moyen de guidage 115, 115' amortissant, est configuré pour permettre aussi le retour du panneau 3 de volets 7 vers la position de maintien initiale à la suite d'un choc ayant entraîné le déplacement du panneau 3 de volets 7 vers une position reculée, et lorsqu'il n'y a plus de contrainte exercée sur le panneau 3 de volets 7 suivant l'axe du choc.

Selon une variante illustrée sur les figures 8a et 8b, le ou chaque moyen de guidage 115 comprend un moyen de compression élastique 125 d'une part agencé et fixé dans le logement 121, et d'autre part fixé à un élément de retenue 113 respectif, ici à la butée 114 en extrémité d'une patte de fixation 113. Ainsi, en cas de choc le déplacement de la patte de fixation 113 dans le logement 121 est possible par compression du moyen de compression élastique 125 (cf. figure 8b). Plus précisément, le moyen de compression élastique 125 est fixé dans une région d'extrémité arrière du logement 121 du côté opposé au panneau 3 de volets 7, par exemple de façon non limitative à une coupelle 126 prévue à l'arrière et solidaire du logement 121. Cette coupelle 126 est par exemple de forme sensiblement annulaire.

Le moyen de compression élastique 125 est donc susceptible d'une déformation élastique et est avantageusement configuré pour une déformation réversible. Il s'agit par exemple d'un moyen de rappel, tel qu'un ressort de compression 125. Le ressort de compression 125 est donc prévu pour absorber le choc dans la plage du ressort 125.

À la suite du choc et lorsqu'il n'y a plus de contrainte exercée sur le panneau 3 de volets 7 suivant l'axe du choc, la patte de fixation 113 peut être ramenée dans la position de maintien initiale de la figure 8a sous l'effet du ressort de compression 125.

Selon une autre variante illustrée sur les figures 9a et 9b, le support 105' n'est pas configuré pour un déplacement des pattes de fixation 113 à l'encontre d'un moyen de compression respectif, mais cette fois l'intérieur du logement 121 définit une chambre d'air 127, et le déplacement de chaque patte de fixation 113 est possible par compression de l'air présent dans la chambre d'air 127 associée.

À cet effet, on prévoit une étanchéité à l'air à l'avant du logement 121, du côté du panneau 3 de volets 7, tandis qu'une fuite d'air doit être possible à l'arrière du logement 121, du côté opposé au panneau 3 de volets 7.

Pour cela, un moyen d'étanchéité 129 est agencé entre l'extrémité du logement 121 du côté du panneau 3 de volets 7, c'est-à-dire l'extrémité avant du logement 121, et la patte de fixation 113. Dans cet exemple, le moyen d'étanchéité 129 est agencé dans l'ouverture de la paroi annulaire 123 à l'avant du logement 121.

D'autre part, l'arrière du logement 121 peut présenter un orifice de sortie d'air de diamètre inférieur au diamètre défini par le corps du logement 121. L'orifice de sortie d'air est par exemple défini par l'ouverture de la coupelle 126 agencée à l'arrière du logement 121.

Afin de permettre un déplacement réversible, et donc un retour en position de maintien initiale lorsque la contrainte suivant l'axe du choc disparaît, on prévoit avantageusement un moyen de rappel de chaque patte de fixation 113 vers la position de maintien initiale dans le logement 121 correspondant définissant une chambre d'air 127. Ce moyen de rappel, tel qu'un ressort (non représenté), est fixé d'une part à la patte de fixation 113 par exemple au niveau de la butée 114, et peut être fixé d'autre part aussi bien à l'avant qu'à l'arrière du logement 121.

### Troisième mode de réalisation qui ne fait pas partie de l'invention

On a représenté sur les figures 10 à 11b, un dispositif d'obturation 201 selon un troisième mode de réalisation. Seules les différences par rapport au deuxième mode de réalisation décrit en référence aux figures 7 à 9b, sont détaillées par la suite. Les éléments identiques ne sont pas décrits de nouveau.

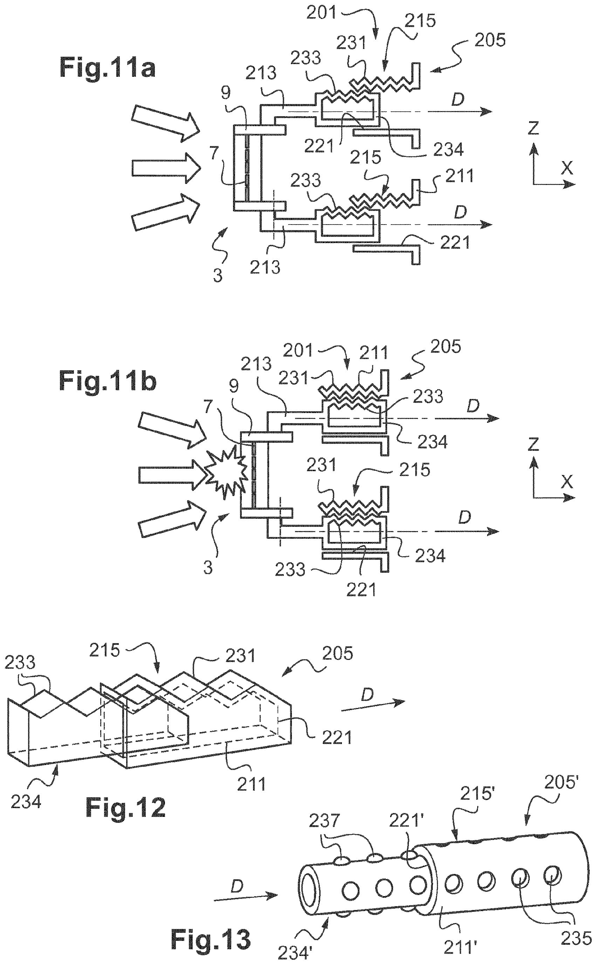

Selon ce troisième mode de réalisation, le ou chaque moyen de guidage 205 ou 205' amortissant (figures 11a à 13) comprend au moins une paroi présentant une pluralité de crans et configurée pour coopérer avec une contre-forme complémentaire de l'élément de retenue 213 porté par le panneau 3 de volets 7. Ces crans permettent de définir différentes positions reculées (figure 11b) par rapport à la position de maintien initiale (figure 11a) en cas de choc sur le panneau 3 de volets 7, permettant un déplacement saccadé ou par paliers de l'élément de retenue 213 en cas de choc. La forme et la taille de ces crans sont variables en fonction de la conception et de l'élasticité du matériau utilisé.

Dans l'exemple des figures 11a à 12, le manchon 211 de fixation comporte au moins une crémaillère 231 formant moyen de guidage 205. La crémaillère 231 est configurée pour coopérer avec une contre-forme crantée complémentaire 233 prévue sur l'élément de retenue 213. La contre-forme crantée 233 est par exemple prévue sur une paroi d'une broche 234 terminant la patte de fixation 213, cette broche 234 étant insérée et déplacée à l'intérieur du logement 221 défini par le manchon 211 de fixation. Dans cet exemple, la crémaillère 231 est prévue sur la paroi supérieure du manchon 211 définissant le logement 221. De façon complémentaire, c'est la paroi supérieure de la broche 234 de la patte de fixation 213 qui présente la contre-forme crantée 233.

Selon une variante illustrée sur la figure 13, le manchon 211' de fixation définissant le logement 221' présente une pluralité d'encoches ou d'orifices 235 pour la réception d'une pluralité de saillies 237 de forme complémentaire à la forme des encoches ou orifices 235 prévus sur une broche 234' respective terminant la patte de fixation 213 associée. À l'inverse, les encoches ou orifices peuvent être prévus sur la broche 234' de la patte de fixation 213 et les saillies complémentaires sur le support 205.

La coopération de forme entre la crémaillère 231 et la contre-forme crantée 233 ou entre les encoches / orifices 235 et saillies 237, permet de définir une succession de points durs qui autorisent le déplacement des broches 234, 234' dans les logements correspondantes 221, 221' tout en absorbant l'énergie graduellement.

Ainsi, lors d'un choc sur le panneau 3 de volets 7, le panneau 3 est propulsé vers l'arrière, les broches 234 ou 234' sont insérées dans les logements 221 ou 221' correspondants et se déplacent vers l'arrière selon la direction D. Le passage de chaque cran du fait de la coopération de forme entre les broches 234, 234' et les manchons 211, 211' correspondants permet de dissiper à chaque fois une partie de l'énergie de l"impact.

Par ailleurs, les broches 234, 234' peuvent être indépendantes du reste de la patte de la fixation 213 et plus généralement du panneau 3 de volets 7, c'est-à-dire qu'elles sont modulables et amovibles, de sorte que leur remplacement est facilité en cas de dégradation suite à un choc.

Ainsi, le dispositif d'obturation 1 ; 101 ; 201 avec un support 5 ; 105, 105' ; 205, 205' du panneau 3 de volets 7 selon l'un ou l'autre des modes de réalisation précédemment décrit permet, en cas de choc à faible vitesse, en particulier un choc normalisé connu sous le nom de choc Danner, de guider vers l'arrière, suivant l'axe du choc, le panneau 3 de volets 7 tout en absorbant l'énergie du choc, autrement dit en amortissant le choc. Cela permet d'éviter d'endommager le panneau 3 de volets 7 en lui-même mais permet également de protéger le ou les échangeurs thermiques qui se situent généralement derrière le panneau 3 de volets 7.

## Revendications

1. Dispositif d'obturation (1 ; 101 ; 201) d'entrée d'air pour véhicule automobile, comprenant :
- au moins un moyen d'obturation (3) destiné à être agencé dans une entrée d'air du véhicule automobile, et
- un support (5 ; 105, 105' ; 205, 205') du moyen d'obturation (3) pour maintenir le moyen d'obturation (3) et destiné à être fixé sur une structure porteuse du véhicule automobile,
le support (5 ; 105, 105' ; 205, 205') comprenant au moins un moyen de guidage (15 ; 115, 115' ; 215, 215') amortissant du moyen d'obturation (3), pour permettre, en cas de choc sur le moyen d'obturation (3), le déplacement du moyen d'obturation (3) depuis une position de maintien initiale vers une position reculée par rapport à la position initiale,
le moyen d'obturation (3) du flux d'air comportant au moins un panneau de volets (7) destiné à être agencé en amont d'un dispositif d'échange thermique du véhicule automobile selon le sens d'écoulement d'un flux d'air,
**caractérisé en ce que** ledit au moins un moyen de guidage (15 ; 115, 115' ; 215, 215') amortissant est un moyen de guidage d'un élément de retenue (13 ; 113 ; 213) associé porté par le moyen d'obturation (3), depuis la position de maintien initiale vers la position reculée, en cas de choc,
et **en ce que** ledit au moins un moyen de guidage amortissant comprend une rainure (15 ; 15') pour le guidage de l'élément de retenue (13) associé, la rainure (15') étant conformée avec un rétrécissement progressif.

2. Dispositif d'obturation (101 ; 201) selon la revendication précédente, dans lequel ledit au moins un moyen de guidage (15 ; 115, 115' ; 215, 215') amortissant est configuré pour permettre un déplacement réversible du moyen d'obturation (3) en cas de choc.

3. Dispositif d'obturation (1 ; 101 ; 201) selon l'une quelconque des revendications précédentes, dans lequel ledit au moins un moyen de guidage (15 ; 115, 115' ; 215, 215') amortissant est un moyen de guidage en translation.

4. Dispositif d'obturation (1 ; 101 ; 201) selon l'une quelconque des revendications précédentes, dans lequel ledit au moins un moyen de guidage (15 ; 115, 115' ; 215, 215') amortissant est configuré pour définir un chemin de déplacement par paliers successifs.

5. Dispositif d'obturation (1 ; 101 ; 201) selon l'une quelconque des revendications précédentes, présentant plusieurs zones de fixation entre le moyen d'obturation (3) et le support (5 ; 105, 105' ; 205, 205') du moyen d'obturation (3), et dans lequel le support (5 ; 105, 105' ; 205, 205') comprend au niveau de chaque zone de fixation un moyen de guidage (15 ; 115, 115' ; 215, 215') amortissant du moyen d'obturation (3), pour permettre, en cas de choc sur le moyen d'obturation (3), le déplacement du moyen d'obturation (3) depuis une position de maintien initiale vers une position reculée par rapport à la position initiale.

6. Module de face avant pour véhicule automobile comprenant un dispositif d'obturation (1 ; 101 ; 201) selon l'une quelconque des revendications précédentes

## Patentansprüche

1. Vorrichtung zum Verschließen (1; 101; 201) eines Lufteinlasses für ein Kraftfahrzeug, welche umfasst:
- wenigstens ein Verschlussmittel (3), das dazu bestimmt ist, in einem Lufteinlass des Kraftfahrzeugs angeordnet zu werden, und
- einen Träger (5; 105, 105'; 205, 205') des Verschlussmittels (3) zum Halten des Verschlussmittels (3), der dazu bestimmt ist an einer tragenden Struktur des Kraftfahrzeugs befestigt zu werden,
wobei der Träger (5; 105, 105'; 205, 205') wenigstens ein dämpfendes Führungsmittel (15; 115, 115'; 215, 215') des Verschlussmittels (3) umfasst, um im Falle eines Stoßes gegen das Verschlussmittel (3) die Verlagerung des Verschlussmittels (3) aus einer ursprünglichen Halteposition hin zu einer bezüglich der ursprünglichen Position zurückgeschobenen Position zu ermöglichen,
wobei das Verschlussmittel (3) des Luftstroms wenigstens eine Klappenplatte (7) aufweist, die dazu bestimmt ist, in der Strömungsrichtung eines Luftstroms stromaufwärts einer Wärmeaustauschvorrichtung des Kraftfahrzeugs angeordnet zu werden,
**dadurch gekennzeichnet, dass** das wenigstens eine dämpfende Führungsmittel (15; 115, 115'; 215, 215') ein Mittel zur Führung eines zugeordneten Halteelements (13; 113; 213), das von dem Verschlussmittel (3) getragen wird, von der ursprünglichen Halteposition zu der zurückgeschobenen Position hin im Falle eines Stoßes ist,
und dadurch, dass das wenigstens eine dämpfende Führungsmittel eine Nut (15; 15') zur Führung des zugeordneten Halteelements (13) umfasst, wobei die Nut (15') mit einer allmählichen Verengung ausgebildet ist.

2. Vorrichtung zum Verschließen (101; 201) nach dem vorhergehenden Anspruch, wobei das wenigstens eine dämpfende Führungsmittel (15; 115, 115'; 215, 215') dafür ausgelegt ist, eine reversible Verlagerung des Verschlussmittels (3) im Falle eines Stoßes zu ermöglichen.

3. Vorrichtung zum Verschließen (1; 101; 201) nach einem der vorhergehenden Ansprüche, wobei das wenigstens eine dämpfende Führungsmittel (15; 115, 115'; 215, 215') ein Translationsführungsmittel ist.

4. Vorrichtung zum Verschließen (1; 101; 201) nach einem der vorhergehenden Ansprüche, wobei das wenigstens eine dämpfende Führungsmittel (15; 115, 115'; 215, 215') dafür ausgelegt ist, einen Verlagerungsweg durch aufeinander folgende Lager zu definieren.

5. Vorrichtung zum Verschließen (1; 101; 201) nach einem der vorhergehenden Ansprüche, welche mehrere Befestigungsbereiche zwischen dem Verschlussmittel (3) und dem Träger (5; 105, 105'; 205, 205') des Verschlussmittels (3) aufweist, und wobei der Träger (5; 105, 105'; 205, 205') an jedem Befestigungsbereich ein dämpfendes Führungsmittel (15; 115, 115'; 215, 215') des Verschlussmittels (3) umfasst, um im Falle eines Stoßes gegen das Verschlussmittel (3) die Verlagerung des Verschlussmittels (3) aus einer ursprünglichen Halteposition hin zu einer bezüglich der ursprünglichen Position zurückgeschobenen Position zu ermöglichen.

6. Frontmodul für ein Kraftfahrzeug, welches eine Vorrichtung zum Verschließen (1; 101; 201) nach einem der vorhergehenden Ansprüche umfasst.

## Claims

1. Device (1; 101; 201) for sealing an air inlet of a motor vehicle, comprising:
- at least one sealing means (3) intended to be arranged in an air inlet of the motor vehicle, and
- a support (5; 105, 105'; 205, 205') for the sealing means (3) for the purpose of holding the sealing means (3) and intended to be attached to a load-bearing structure of the motor vehicle,
the support (5; 105, 105'; 205, 205') comprising at least one damping guiding means (15; 115, 115'; 215, 215') of the sealing means (3) such that, in the event of an impact on the sealing means (3), the sealing means (3) is able to move from an initial holding position to a position that is set back with respect to the initial position,
the means (3) for sealing the flow of air comprising at least one panel of flaps (7) that is intended to be arranged upstream of a heat exchange device of the motor vehicle in the direction of flow of a flow of air,
**characterized in that** said at least one damping guiding means (15; 115, 115'; 215, 215') is a means for guiding an associated retention element (13; 113; 213) borne by the sealing means (3), from the initial holding position to the set back position in the event of an impact,
and **in that** said at least one damping guiding means comprises a groove (15; 15') for guiding the associated retention element (13), the groove (15') being shaped so as to progressively narrow.

2. Sealing device (101; 201) according to the preceding claim, in which said at least one damping guiding means (15; 115, 115'; 215, 215') is configured to allow a reversible displacement of the sealing means (3) in the event of an impact.

3. Sealing device (1; 101; 201) according to any one of the preceding claims, in which said at least one damping guiding means (15; 115, 115'; 215, 215') is a means for guiding in translation.

4. Sealing device (1; 101; 201) according to any one of the preceding claims, in which said at least one damping guiding means (15; 115, 115'; 215, 215') is configured to define a displacement path by successive stages.

5. Sealing device (1; 101; 201) according to any one of the preceding claims, having multiple attachment zones between the sealing means (3) and the support (5; 105, 105'; 205, 205') for the sealing means (3), and in which the support (5; 105, 105'; 205, 205') comprises at each attachment zone a damping guiding means (15; 115, 115'; 215, 215') for the sealing means (3), in order that, in the event of an impact on the sealing means (3), the sealing means (3) is able to move from an initial holding position to a position that is set back from the initial position.

6. Front face module for a motor vehicle comprising a sealing device (1; 101; 201) according to any one of the preceding claims.
